# EUROPEAN PATENT APPLICATION

(11) **EP 1 672 843 A2**
(43) Date of publication of application: **21.06.2006**
(21) Application number: 05027608.8
(22) Date of filing: 16.12.2005
(51) Int. Cl.: H04L 12/28

(54) **Ad hoc communication system, mobile terminal center, communication method and communication program**

(30) Priority: 16.12.2004 JP 2004364921
(71) Applicant: NEC Corporation, Minato-ku Tokyo (JP)
(72) Inventor: Nitou, Hiroaki, Minato-ku, Tokyo (JP)
(74) Representative: Vossius & Partner

(57) **Abstract**

An ad-hoc communication system, a mobile terminal, a center, an ad-hoc communication method and an ad-hoc communication program, in which information is directly communicated each other among mobile terminals mounted on vehicles to raise information accuracy while ensuring privacy. The center issues an ad-hoc ID with an expiration date for uniquely specifying the vehicles to deliver this ad-hoc ID to the vehicles. The center collects an ad-hoc identification of a mobile terminal exhibiting a different tendency from other mobile terminals and a report extracting information concerning the tendency, calculates reliability and bias of information produced by the mobile terminal included in the report on the basis of the report, and implants the reliability and bias of the information in the ad-hoc identification. The center puts a signature on the ad-hoc identification to prevent tampering of the ad-hoc identification.

## Description

The present invention relates to an ad-hoc communication system, a mobile terminal, a center, an ad-hoc communication method and an ad-hoc communication program, in which information is directly communicated from one to another among mobile terminals mounted on vehicles.

A probe information system for collecting the predetermined information from various sensors such as probes mounted on a vehicle and providing users with the desired information has been developed. In this probe information system, one vehicle is provided with a center as an infrastructure and collects information representing conditions of the vehicle such as its running conditions and environments, for instance, operating situations of brakes, wipers and the like from probes mounted on the vehicle. By combining position information of the vehicle and time with the collected information, the vehicle can be provided with time information required for moving between two locations, road and traffic information, weather information and the like. At present, in this probe information system, the vehicles are connected to the center using a cellular phone network or the like and communications costs arise. However, the communications costs become heavy burdens for users and this is one problem.

In recent years, in order to solve this problem, attention has been paid to a probe information system using an ad-hoc communication. The ad-hoc communication is a communication for allowing plural mobile terminals mounted on vehicles to carry out direct information communications among them. In such a probe information system, each vehicle sends its own information and receives information of other vehicles via the probes through the ad-hoc communication and brief road and traffic information and the like can be produced within each vehicle. In the ad-hoc communication, usually, no infrastructure like access points of a wireless LAN (local area network) is necessary and information can be sent and received using only connectible wireless terminals such as a personal computer, a PDA, a mobile phone and the like. Hence, a simple network can be constructed without arising the aforementioned communications costs.

On the other hand, there are some technical problems on constructing a network using the ad-hoc communication. For example, since the terminals always move, a link between the terminals does not become secure and no fixed network topology can be achieved. Furthermore, a network scale is restricted and outputs are also limited.

In particular, while measures against information leakage are worried, problems about security are especially large. The ad-hoc communication, similar to the Internet, is filled with problems such as tapping, tampering, impersonating and so on. In the ad-hoc communication, plural terminals connected one another in the network inevitably share the information. The information mostly represents the properties of the terminals and substantially means personal information. There is a possibility that privacy cannot be protected and hence an authentication technique of high accuracy is required.

The above-described problems are almost the same as the probe information system using the ad-hoc communication. The information dispatched from the probes mounted on the vehicle substantially represents the personal information and is shared by plural vehicles.

In the case that information is shared among plural vehicles, when a malicious vehicle intentionally circulates false information to confuse others, reliability of the communicated information is lowered. Moreover, even in the same environment, since information depends on troubles and characteristics of a vehicle, the information such as information of time required for moving between two locations, road and traffic information and the like is not always same. The reliability deterioration of the information and the information bias lowers accuracy of the information itself. Therefore, in such a case, a unique ID (identification) is given to each vehicle, and the information dispatched from the probes mounted on the vehicles and the IDs of the vehicles are controlled together. By eliminating only the information of the vehicle spreading false information, the information reliability can be improved. Further, the bias of the information produced by each vehicle is evaluated to correct the bias. By taking these measures, the reliability of the information itself can be improved. In order to remove only the information of the vehicle spreading the false information or to evaluate the bias of the information produced by each vehicle by executing the controls described above, it needs a system for distributing such information to more vehicles.

However, in the case that the fixed IDs are given to the vehicles, it is readily imaged that the aforementioned breach of privacy can be caused depending on the produced information. For instance, when a vehicle produces time information required for moving between certain two locations, the fact that this vehicle has certainly driven between the certain two locations is known by an almost unlimitedly large number of vehicles. Moreover, if only the information of specific IDs is collected, the movement of this vehicle can be perfectly caught. On the other hand, the information must be shared by plural vehicles in the ad-hoc communication and the ID given to each vehicle must be opened to the other vehicles, that is, the ID has an openness to the public.

In the related art, goods are readily and surely distributed by using the information which is under personal charge, as disclosed in Japanese Patent Application Laid-Open No. 2003-157366, "Personal Information Control Method, Control Apparatus, Distribution Apparatus and Goods Distribution System"(Patent Document I). This is one example of a distribution of goods. In this case, when a user buys goods from a vending machine (a "distribution apparatus") by using a mobile terminal, a key used in encryption technology is employed. A cipher ID with an expiration date is sent to the vending machine and the vending machine decodes the cipher ID with the expiration date to sell the goods. However, when this technology is applied to a probe information system using an ad-hoc communication, keys used in the encryption must be employed for IDs communicated among the vehicles, but applying the encryption technology to the IDs having the openness contradicts the significance of ad-hoc communication.

It is therefore an object of the present invention in view of the aforementioned problems of the related art to provide an ad-hoc communication system, a mobile terminal, a center, an ad-hoc communication method and program that improve accuracy of information communicated among vehicles through an ad-hoc communication and ensure privacy.

In accordance with one aspect of the present invention, there is provided an ad-hoc communication system, in which information is directly communicated among mobile terminals through an ad-hoc communication, comprising: at least two mobile terminals; and a center for issuing an ad-hoc identification for uniquely specifying each mobile terminal communicating information through the ad-hoc communication, the center sending an ad-hoc identification with an expiration date to the mobile terminal corresponding to the ad-hoc identification.

In an ad-hoc communication system, the center collects an ad-hoc identification of a mobile terminal exhibiting a different tendency from other mobile terminals and a report extracting information concerning the tendency, calculates reliability and bias of information produced by the mobile terminal included in the report on the basis of the report, and embeds the reliability and bias of the information in the ad-hoc identification.

In an ad-hoc communication system, the center can attach a signature to the ad-hoc identification to prevent tampering of the ad-hoc identification.

In an ad-hoc communication system, the mobile terminal is mounted on a vehicle having a probe for detecting vehicle condition and the ad-hoc identification for uniquely specifying the vehicle is given to information communicated by the probe to carry out the ad-hoc communication among the vehicles.

In accordance with another aspect of the present invention, there is provided a mobile terminal for directly communicating information with other mobile terminals through an ad-hoc communication for directly communicating the information among the mobile terminals, in which an ad-hoc identification with an expiration date for uniquely specifying the mobile terminal for communicating the information is given to the information.

A mobile terminal further comprises a storage for storing information representing condition of the mobile terminal and information received by other terminals, the information representing condition of other terminals; and a statistical processing device for executing a statistical processing of the information stored in the storage to produce a report extracting an ad-hoc identification of a mobile terminal representing a different tendency from other mobile terminals and information concerning the tendency.

A mobile terminal further comprises a signature authentication device for authenticating a signature of the ad-hoc identification included in the information representing the condition of another terminal.

In accordance with a further aspect of the present invention, there is provided a center including an ad-hoc identification issue device for issuing an ad-hoc identification for uniquely specifying mobile terminals communicating information through an ad-hoc communication for directly communicating the information among the mobile terminals, the ad-hoc identification issue device setting an expiration date to the issued ad-hoc identification and sending the ad-hoc identification with the expiration date to a mobile terminal corresponding to the ad-hoc identification.

A center further comprises a report collection device for collecting an ad-hoc identification of a mobile terminal exhibiting a different tendency from other mobile terminals and a report extracting information concerning the tendency, and the ad-hoc identification issue device calculates reliability and bias of information produced by the mobile terminal included in the report on the basis of the report, and embeds the reliability and bias of the information in the ad-hoc identification.

A center further comprises a signature device for putting a signature on the ad-hoc identification to prevent tampering of the ad-hoc identification.

In accordance with another aspect of the present invention, there is provided an ad-hoc communication method in an ad-hoc communication system including mobile terminals for directly communicating information each other through an ad-hoc communication for directly communicating the information among the mobile terminals, and a center for issuing an ad-hoc identification for uniquely specifying the mobile terminals, comprising: a step that the mobile terminal requests the center to issue the ad-hoc identification; a step that the center collects an ad-hoc identification of a mobile terminal exhibiting a different tendency from other terminals and a report extracting information concerning the tendency, from the mobile terminal; and a step that the center calculates reliability and bias of information produced by a mobile terminal included in the report on the basis of the report, implants the reliability and bias of the information to an ad-hoc identification with an expiration date, and issues the implanted ad-hoc identification to the mobile terminal.

In accordance with still another aspect of the present invention, there is provided an ad-hoc communication program in an ad-hoc communication system including mobile terminals for directly communicating information each other through an ad-hoc communication for directly communicating the information among the mobile terminals, and a center for issuing an ad-hoc identification for uniquely specifying the mobile terminals, for use in a computer, comprising: a process that the mobile terminal requests the center to issue the ad-hoc identification; a process that the center collects an ad-hoc identification of a mobile terminal exhibiting a different tendency from other terminals and a report extracting information concerning the tendency, from the mobile terminal; and a process that the center calculates reliability and bias of information produced by a mobile terminal included in the report on the basis of the report, implants the reliability and bias of the information to an ad-hoc identification with an expiration date, and issues the implanted ad-hoc identification to the mobile terminal.

According to the present invention, accuracy of information communicated among vehicles through an ad-hoc communication can be raised while privacy can be ensured.

The objects, features and advantages of the present invention will become more apparent from the consideration of the following detailed description, taken in conjunction with the accompanying drawings, in which:
Fig. 1 is a schematic block diagram of a probe information system using an ad-hoc communication system according to a first embodiment of the present invention;
Fig. 2 is a block diagram of a center shown in Fig. 1;
Fig. 3 is a block diagram of a vehicle shown in Fig. 1;
Fig. 4 is a flow chart for showing an operation of the probe information system using the ad-hoc communication system according to the first embodiment of the present invention shown in Fig. 1;
Fig. 5 is a block diagram of a probe information system using an ad-hoc communication system according to a second embodiment of the present invention; and
Fig. 6 is a block diagram of a center shown in Fig. 5.

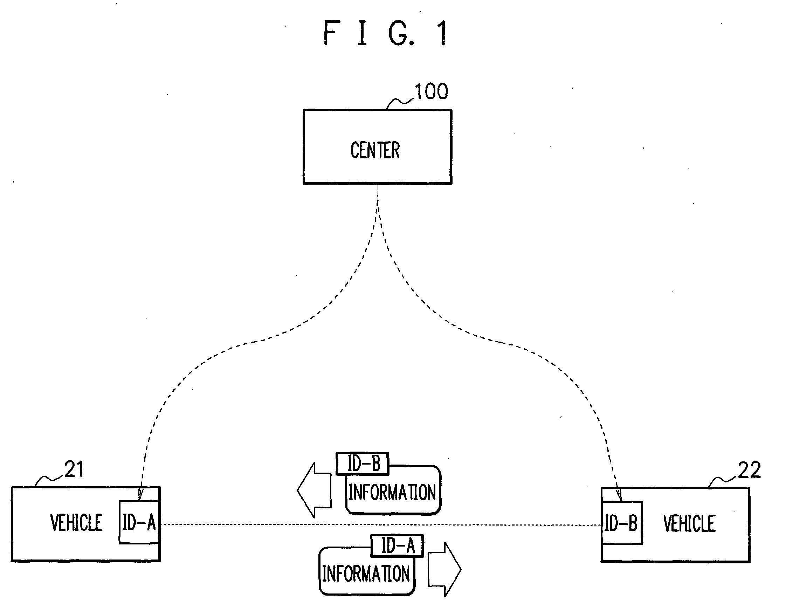

Referring now to the drawings, there is shown in Fig. 1 a probe information system using an ad-hoc communication system according to a first embodiment of the present invention.

As shown in Fig. 1, vehicles 21 and 22 send and receive the desired information via probes mounted on the vehicles 21 and 22 to share the information. When the information is shared and used commonly by plural vehicles, a center 100 successively issues proper IDs and delivers the issued IDs to the corresponding vehicles and attaches the IDs to the common information. For example, the information output from the vehicle 21 is attached ID-A and the information output from the vehicle 22 is attached ID-B. With this ID attachment to the information, the sources of the information are specified to improve information precision and to realize protection of the vehicles' privacy. The common information shared among the vehicles includes time information required for moving between certain two locations and the like.

In this embodiment, the center 100 issues ad-hoc IDs having expiration dates and delivers the ad-hoc IDs to the corresponding vehicles 21 and 22. The ad-hoc ID uniquely specifies a vehicle for carrying out information communications using the ad-hoc communication. The center 100 determines reliability of the information produced by the vehicles and bias of the information. The ad-hoc ID includes the reliability and the bias of the information and a signature is affixed to the information to prevent modification. The vehicles 21 and 22 send a report, which contains an ad-hoc ID of a vehicle producing false or abnormal information at the delivery of the ad-hoc IDs and another ad-hoc ID of a vehicle always producing biased information, with its biased extent to the center. The signature and the report will be described hereinafter along with the explanations of the center 100 and the vehicle 21.

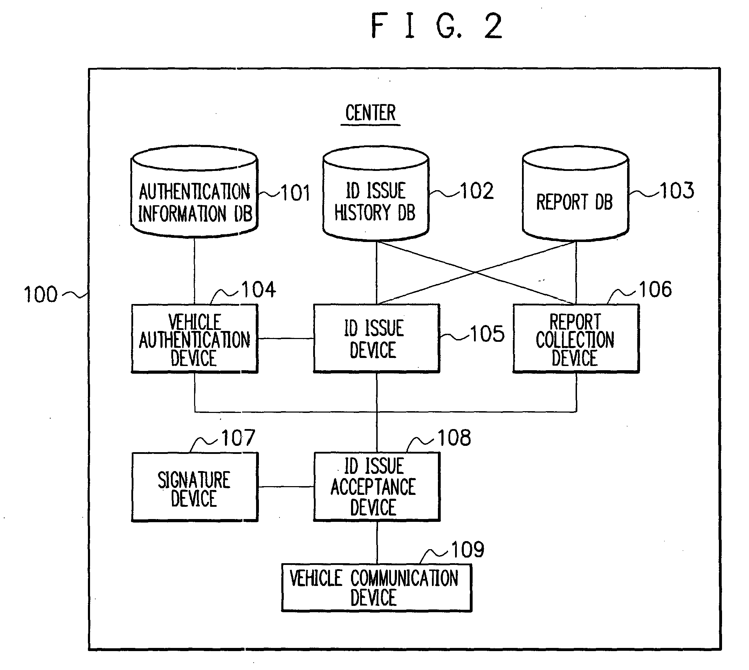

Fig. 2 shows one embodiment of the center 100 shown in Fig. 1. The center 100 includes an authentication information DB (database) 101, an ID issue history DB 102, a report DB 103, a vehicle authentication device 104, an ID issue device 105, a report collection device 106, a signature device 107, an ID issue acceptance device 108 and a vehicle communication device 109.

The authentication information DB 101 stores authentication information for authenticating the vehicles along with vehicle identifiers for identifying the vehicles for use only within the center 100. The authentication information and the vehicle identifiers are issued once at the initial time within the center 100. The authentication information is information of, for instance, an ID and a password, an electronic certification, or the like and is informed to the vehicle in advance. The vehicle identifier is not informed to the vehicle and is employed only for identifying the vehicle within the center 100.

The ID issue history DB 102 stores histories of the ad-hoc IDs issued in the ID issue device 105. The information stored as the history of the ad-hoc ID includes an issue date and time of the ad-hoc ID, the corresponding vehicle and its vehicle identifier.

The report DB 103 stores the reports collected from the vehicles. The report includes the extracted information such as the ad-hoc ID of the vehicle showing different tendencies from the other vehicles. The ad-hoc ID is replaced with the vehicle identifier when stored.

The vehicle authentication device 104 authenticates a vehicle requesting an issue of an ad-hoc ID by using the vehicle identifier stored in the authentication information DB 101 and the authentication information presented by the vehicle.

The ID issue device 105 issues the ad-hoc IDs to the vehicles. The ID issue device 105 acquires the vehicle identifier of the vehicle requesting the issue of the ad-hoc ID from the vehicle authentication device 104, searches the information concerning the vehicle from the report DB 103, and calculates reliability of the information produced by the vehicle and bias of the information. In addition, the ID issue device 105 issues an ad-hoc ID implanted with an expiration date only to the vehicle requesting the issue of the ad-hoc ID. The center 100 properly changes the calculated reliability and bias of the information when the expiration date becomes due to reissue an ad-hoc ID. The issue history of the ad-hoc ID is stored in the ID issue history DB 102.

The report collection device 106 collects the reports from the vehicles to store the collected reports into the report DB 103. Although the reports collected from the vehicles include the ad-hoc IDs, the report collection device 106 searches the ID issue history DB 102 for the corresponding vehicle identifiers, replaces the ad-hoc IDs of the reports with the vehicle identifiers, and stores the vehicle identifiers into the report DB 103.

The signature device 107 for preventing the tampering of the ad-hoc ID attaches a signature to the ad-hoc ID when the ID issue acceptance device 108 sends the ad-hoc ID to the vehicle.

The ID issue acceptance device 108 accepts a request of an ad-hoc ID issue from the vehicle. The ID issue acceptance device 108 requests the vehicle authentication device 104 and the report collection device 106 to operate the processing for the vehicle and receives the ad-hoc ID affixed with the signature to output the signed ad-hoc ID.

The vehicle communication device 109 provides a communication path to communicate with the vehicles. The communication path is, for example, a cellular phone network, the Internet or a business use radio path.

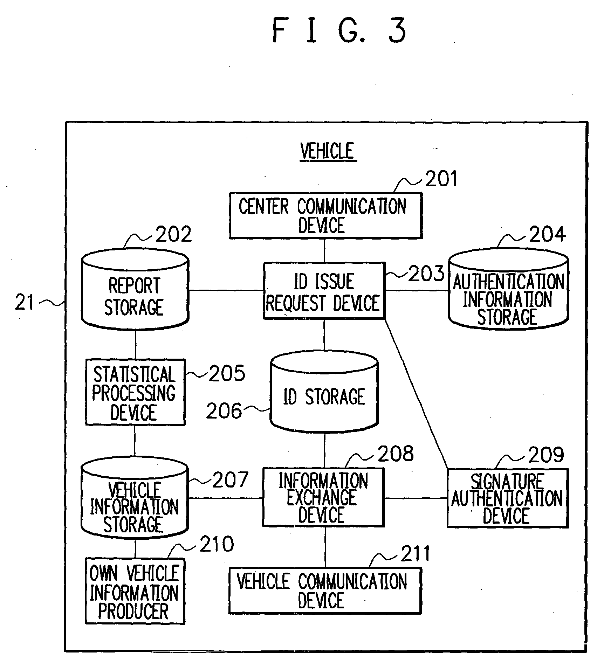

In Fig. 3, there is shown one embodiment of the vehicle 21 shown in Fig. 1. The vehicle 22 has the same construction as the vehicle 21. The vehicle 21 includes a center communication device 201, a report storage 202, an ID issue request device 203, a authentication information storage 204, a statistical processing device 205, an ID storage 206, a vehicle information storage 207, an information exchange device 208, a signature authentication device 209, an own vehicle information producer 210 and a vehicle communication device 211.

The center communication device 201 provides users with a communication path with the center, such as a cellular phone network, the Internet or a business use radio path.

The report storage 202 stores the reports obtained in the statistical processing device 205.

The ID issue request device 203 requests the center 100 to issue an ad-hoc ID. Since the ad-hoc ID has an expiration date, the ID issue request device 203 requests the center 100 to issue the ad-hoc ID every time when the expiration date becomes due. The authentication information storage 204 stores the authentication information to be presented to the center 100. When the issue of the ad-hoc ID is requested to the center 100, the vehicle authentication is requested from the center 100 by return communication and hence the authentication information stored in the authentication information storage 204 is used for this request. Moreover, in response to a request of a report from the center 100, the report stored in the report storage 202 is sent to the center 100. Thereafter, the signature authentication device 209 receives the ad-hoc ID of its own vehicle from the center 100 and confirms that there is no modification in the ad-hoc ID, and the ad-hoc ID is stored into the ID storage 106.

The statistical processing device 205 executes a statistical processing of the information stored in the vehicle information storage 207 and extracts the result to produce a report.

The ID storage 206 stores the ad-hoc ID of its own vehicle, which is obtained from the center 100. Since the ad-hoc ID has an expiration date, when its expiration date becomes due, the ad-hoc ID is deleted.

The vehicle information storage 207 stores not only own vehicle information produced by the vehicle information producer 210 described hereinafter but also vehicle information obtained from other vehicles via the vehicle communication device 211 and the information exchange device 208. The vehicle information includes, for instance, information representing time required for moving between certain two locations, and information representing a typical vehicle condition such as an ad-hoc ID of a vehicle that produced that information. The vehicle information obtained from other vehicles is produced by the own vehicle information producers 210 of other vehicles. Therefore, the own vehicle information represents the condition of its own vehicle.

The information exchange device 208 sends the vehicle information stored in the vehicle information storage 207 to other vehicles using the vehicle communication device 211. At this time, the own vehicle information produced in the own vehicle information producer 210 is sent together with the ad-hoc ID of its own vehicle, which is stored in the ID storage 206 and is attached to the own vehicle information. The signatures of the ad-hoc IDs included in the vehicle information obtained from other vehicles are verified in the signature authentication device 209 and the ad-hoc IDs which are not tampered are stored into the vehicle information storage 207.

The signature authentication device 209 authenticates the ad-hoc ID of its own vehicle and the ad-hoc IDs included in the vehicle information obtained from other vehicles are tampered. On this authentication, the signature authentication device 209 authenticates correctness of the signatures attached to the ad-hoc IDs.

The own vehicle information producer 210 produces the own vehicle information. The own vehicle information also includes information concerning the GPS (global positioning system), a vehicle speed sensor and an electronic map.

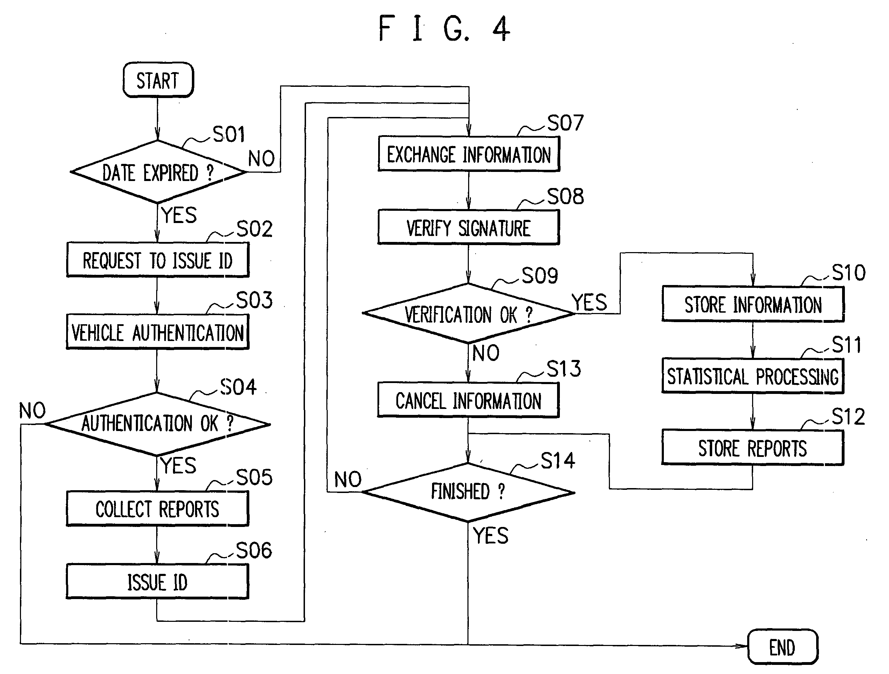

An operation of the probe information system using the ad-hoc communication system according to the first embodiment of the present invention will be described in detail with reference to a flow chart shown in Fig. 4. Before this operation is started, for preparation, the authentication information produced by the center 100 is stored in the authentication information DB 101 of the center 100 and the authentication information storage 204 of the vehicle 21.

First, in the vehicle 21, the ID issue request device 203 checks the expiration date of the ad-hoc ID of the own vehicle, stored in the ID storage 206 (step S01). When the expiration date is not due (step S01/NO), the process moves to step S07.

When the expiration date is due (step S01/YES), the ID issue request device 203 requests the center 100 to issue an ad-hoc ID (step S02).

In the center 100, when receiving the request of the ID issue, the ID issue acceptance device 108 requests the vehicle 21 to send the authentication information to the center 100. In the vehicle 21, the ID issue request device 203 produces a response on the basis of the authentication information stored in the authentication information storage 204 to send the response to the center 100. In the center 100, the ID issue acceptance device 108 receives the information from the vehicle 21 and sends the received information to the vehicle authentication device 104. The vehicle authentication device 104 conducts the authentication of the vehicle 21 on the basis of the information stored in the authentication information DB 101 (step S03).

When the authentication is successful (step S04/YES), the vehicle authentication device 104 sends the vehicle identifier of the vehicle to the ID issue device 105. On the other hand, when the authentication is unsuccessful (step SO4/NO), the operation is ended.

After the ID issue device receives the vehicle identifier, the report collection device 106 requests the vehicle 21 to send the report to the center 100. In the vehicle 21, the ID issue request device 203 sends the report stored in the report storage 202 to the center 100. In the center 100, the report collection device 106 receives the report from the vehicle 21, searches the ID issue history DB 102 for the ad-hoc ID included in the received report, and replaces the ad-hoc ID with the vehicle identifier to store the vehicle identifier into the report DB 103 (step S05).

In the center 100, the ID issue device 105 searches the report DB 103 on the basis of the vehicle identifier obtained from the vehicle authentication device 104, calculates reliability and bias of the information produced by the vehicle, and in addition issues an ad-hoc ID implanted with an expiration date. The issue history of the ad-hoc ID is sent to the ID issue acceptance device 108, and is signed in the signature device 107. The signed ad-hoc ID is sent to the vehicle 21. In the vehicle 21, the ID issue request device 203 sends the received ad-hoc ID to the signature authentication device 209 for authenticating the signature of the ad-hoc ID and stores the authenticated ad-hoc ID in the ID storage 206 (step S06).

In the vehicle 21, the own vehicle information producer 210 always produces the own vehicle information. The produced own vehicle information is stored as the vehicle information in the vehicle information storage 207. The information exchange device 208 exchanges the vehicle information stored in the vehicle information storage 207 for the vehicle information of other vehicles by using the vehicle communication device 211 when the communications with other vehicles become possible. At this time, the own vehicle information produced within its own vehicle by the own vehicle information producer 210 is attached by the ad-hoc ID of its own vehicle, stored in the ID storage 206, and the own vehicle information along with the attached ad-hoc ID are outputted (step S07).

As to the vehicle information obtained from other vehicles, the signatures of the ad-hoc IDs included in the vehicle information are authenticated in the signature authentication device 209 (step S08).

When the ad-hoc ID is authenticated to be without modification (step S09/YES), the vehicle information including this ad-hoc ID is stored in the vehicle information storage 207 (step S10).

The statistical processing device 205 executes the statistical processing of the information stored in the vehicle information storage 207 and extracts the ad-hoc ID of the vehicle exhibiting the different tendency from the other vehicles and the information concerning the tendency (step S11). The extracted information is stored as a report in the report storage 202 (step S12).

On the other hand, when the ad-hoc ID is found tampered (step S09/NO), the vehicle information including this ad-hoc ID is canceled (step S13).

Thereafter, when the information exchange with other vehicles is successively conducted, the process returns to the information exchange (step S07), otherwise the operation ends (step S14).

In this embodiment, the following results can be obtained. First, the information accuracy can be improved while privacy can be ensured. Since the ad-hoc ID with the expiration date is used, the vehicle cannot be tracked beyond the expiration date. This is why the ad-hoc ID itself is implanted with the reliability and bias of the information produced by the vehicle.

Second, the malicious vehicle spreading false information can be eliminated to improve the information reliability. The signature is applied to the ad-hoc ID required for the common use of the information with other vehicles to prevent the tampering. Furthermore, when a vehicle is to circulate the false information, such a vehicle can be readily discriminated.

Third, the information of the vehicle circulating the false information and the information required for correcting the bias of the information produced by each vehicle can be reliably delivered. Because the ad-hoc ID itself required for the common use of the information with other vehicles is implanted with the reliability and bias of the information produced by the vehicle.

Fourth, the information of the vehicle circulating the false information and the information required for correcting the bias of the information produced by each vehicle can be reliably collected. This is why the report is requested from the vehicle when the ad-hoc ID required for the common use of the information with other vehicles is delivered.

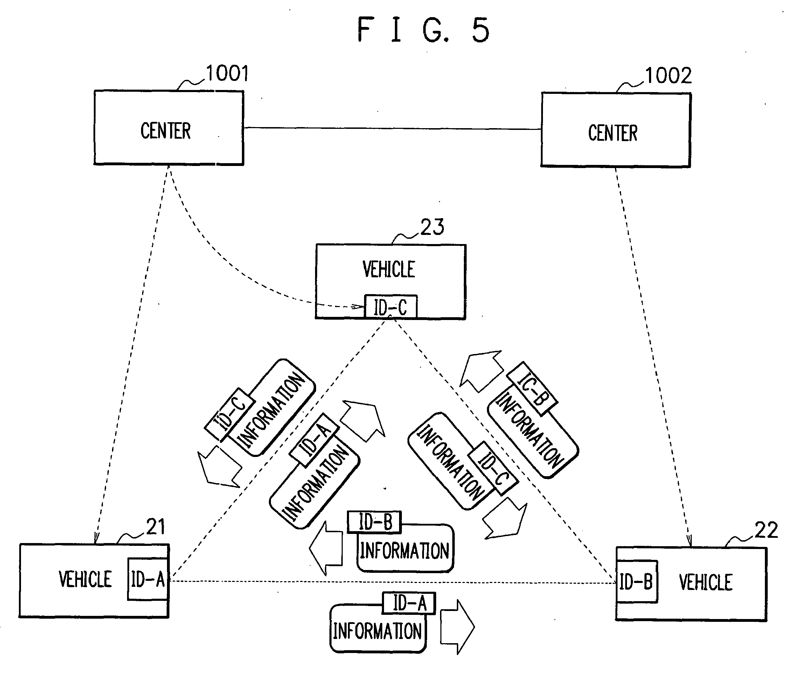

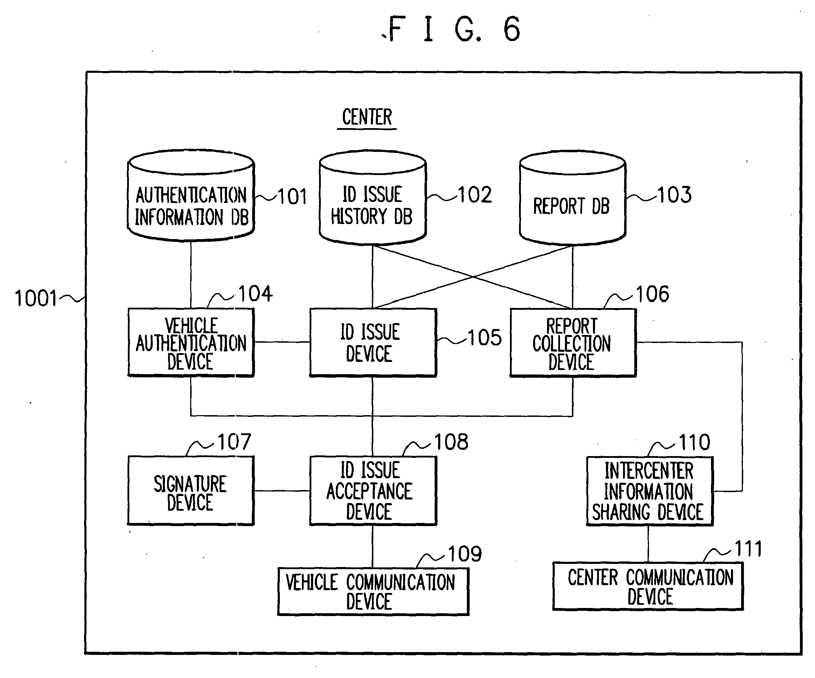

In Fig. 5, there is shown a probe information system using an ad-hoc communication system according to a second embodiment of the present invention. Fig. 6 shows one embodiment of a center shown in Fig. 5.

As shown in Fig. 5, in this embodiment, plural vehicles hold and use the information in common in the same manner as the first embodiment, but a plurality of centers 1001 and 1002 (two in this embodiment, but not restricted to two centers) are used, different from the first embodiment. Each of the vehicles 21, 22 and 23 sharing the information belongs to at least one center and has already received authentication information in advance.

The vehicle receives an ad-hoc ID from the center from which the vehicle received the authentication information in the same manner as the first embodiment. When the vehicle receives the issue of the authentication information from the plural centers such as 1001 and 1002, any of the centers can be selected. When there are plural centers, the issued ad-hoc ID includes an identifier for specifying the center (hereinafter referred to as a center identifier).

In Fig. 6, when plural centers are used, the center 1001 further includes an intercenter information sharing device 110 and a center communication device 111 in addition to the members of the center of the first embodiment.

The intercenter information sharing device 110 receives partial reports of the reports collected from the vehicles, the partial reports each including an ad-hoc ID having a different center identifier from its own identifier, from the report collection device 106 and sends the partial reports to their issued centers by using the center communication device 111. The intercenter information sharing device 110 further receives partial reports of the reports that other centers collected from the vehicles, the partial reports each including an ad-hoc ID having the same center identifier as its own identifier, from other centers and sends the partial reports to the report collection device 106. The report collection device 106 searches the ID issue history DB 102 for the ad-hoc IDs included in the reports, and replaces the ad-hoc IDs with the vehicle identifiers to store the obtained vehicle identifiers in the report DB 103.

The center communication device 111 provides users with a communication path with other centers such as a cellular phone network, the Internet or a business use radio path.

In an operation of this embodiment, by using the center identifiers, different from the first embodiment, one center collects the reports from other centers, but the operation is essentially not changed from the description of the first embodiment. Hence, the same effects as the first embodiment can be obtained. Further, in this embodiment, the plural centers are used and the areas capable of performing the ad-hoc communication by the vehicles can be spread.

While the present invention has been described with reference to the particular illustrative embodiments, it is not to be restricted by those embodiments but only by the appended claims. It is to be appreciated that those skilled in the art can change and modify the embodiments without departing from the scope and spirit of the present invention.

For instance, the above-described ad-hoc communication system can be applied to communicable mobile terminals mounting a particular sensor in addition to the ad-hoc communication among the vehicles.

## Claims

1. An ad-hoc communication system, in which information is directly communicated among mobile terminals through an ad-hoc communication, comprising:
at least two mobile terminals; and
a center for issuing an ad-hoc identification for uniquely specifying each mobile terminal communicating information through the ad-hoc communication, the center sending an ad-hoc identification with an expiration date to the mobile terminal corresponding to the ad-hoc identification.

2. An ad-hoc communication system of claim 1, wherein the center collects an ad-hoc identification of a mobile terminal exhibiting a different tendency from other mobile terminals and a report extracting information concerning the tendency, calculates reliability and bias of information produced by the mobile terminal included in the report on the basis of the report, and embeds the reliability and bias of the information in the ad-hoc identification.

3. A system of claim 1 or 2, wherein the center attaches a signature to the ad-hoc identification to prevent tampering of the ad-hoc identification.

4. A system of claim 1, 2, or 3, wherein the mobile terminal is mounted on a vehicle having a probe for detecting vehicle condition and the ad-hoc identification for uniquely specifying the vehicle is given to information communicated by the probe to carry out the ad-hoc communication among the vehicles.

5. A mobile terminal for directly communicating information with other mobile terminals through an ad-hoc communication for directly communicating the information among the mobile terminals, in which an ad-hoc identification with an expiration date for uniquely specifying the mobile terminal for communicating the information is given to the information.

6. A mobile terminal of claim 5, further comprising:
a storage for storing information representing condition of the mobile terminal and information received by other terminals, the information representing condition of other terminals; and
a statistical processing device for executing a statistical processing of the information stored in the storage to produce a report extracting an ad-hoc identification of a mobile terminal representing a different tendency from other mobile terminals and information concerning the tendency.

7. A mobile terminal of claim 5 or 6, further comprising a signature authentication device for authenticating a signature of the ad-hoc identification included in the information representing the condition of another terminal.

8. A center including an ad-hoc identification issue device for issuing an ad-hoc identification for uniquely specifying mobile terminals communicating information through an ad-hoc communication for directly communicating the information among the mobile terminals, the ad-hoc identification issue device setting an expiration date to the issued ad-hoc identification and sending the ad-hoc identification with the expiration date to a mobile terminal corresponding to the ad-hoc identification.

9. A center of claim 8, further comprising a report collection device for collecting an ad-hoc identification of a mobile terminal exhibiting a different tendency from other mobile terminals and a report extracting information concerning the tendency, the ad-hoc identification issue device calculating reliability and bias of information produced by the mobile terminal included in the report on the basis of the report, and implanting the reliability and bias of the information in the ad-hoc identification.

10. A center of claim 8 or 9, further comprising a signature device for attaching a signature to the ad-hoc identification to prevent tampering of the ad-hoc identification.

11. An ad-hoc communication method in an ad-hoc communication system including mobile terminals for directly communicating information each other through an ad-hoc communication for directly communicating the information among the mobile terminals, and a center for issuing an ad-hoc identification for uniquely specifying the mobile terminals, comprising:
a step that the mobile terminal requests the center to issue the ad-hoc identification;
a step that the center collects an ad-hoc identification of a mobile terminal exhibiting a different tendency from other terminals and a report extracting information concerning the tendency, from the mobile terminal and
a step that the center calculates reliability and bias of information produced by a mobile terminal included in the report on the basis of the report, implants the reliability and bias of the information to an ad-hoc identification with an expiration date, and issues the implanted ad-hoc identification to the mobile terminal.

12. An ad-hoc communication program in an ad-hoc communication system including mobile terminals for directly communicating information each other through an ad-hoc communication for directly communicating the information among the mobile terminals, and a center for issuing an ad-hoc identification for uniquely specifying the mobile terminals, for use in a computer, comprising:
a process that the mobile terminal requests the center to issue the ad-hoc identification;
a process that the center collects an ad-hoc identification of a mobile terminal exhibiting a different tendency from other terminals and a report extracting information concerning the tendency, from the mobile terminal; and
a process that the center calculates reliability and bias of information produced by a mobile terminal included in the report on the basis of the report, implants the reliability and bias of the information to an ad-hoc identification with an expiration date, and issues the implanted ad-hoc identification to the mobile terminal.
